# EUROPEAN PATENT APPLICATION

(11) **EP 4 692 861 A1**
(43) Date of publication of application: **11.02.2026**
(21) Application number: 24778731.0
(22) Date of filing: 09.02.2024
(51) Int. Cl.: G01V 3/08, G01V 3/10

(54) **MAGNETIC SEARCH METHOD AND SYSTEM**

(30) Priority: 27.03.2023 JP 2023049547
(71) Applicant: World Scan Project, Corporation, Shinjuku-ku Tokyo 169-0051 (JP)
(72) Inventor: TADATSU Takashi, Fukuoka-shi Fukuoka 814-0001 (JP); UETAKI, Ryohei, Tokyo 169-0051 (JP); ICHIKAWA, Yasumasa, Tokyo 169-0051 (JP)
(74) Representative: Fabry, Bernd
(86) International application number: PCT/JP2024/004545
(87) International publication number: WO 2024/202586

(57) **Abstract**

To provide a system that can more accurately explore an exploration object.

This method includes a step of setting a coordinate system in a exploration area where the an exploration object (MM) is estimated to be present, a step of measuring exploration magnetic field vectors of multiple measurement points in the coordinate system using a movable first magnetic field sensor (S51, S52), a step of measuring or calculating a reference magnetic field vector in the coordinate system in the exploration area (S53), a step of calculating the vector difference between each exploration magnetic field vector measured at the measurement points and the reference magnetic field vector (S54), and a step of estimating the position of the exploration object based on the vector difference for each measurement point (S55).

## Description

### Technical Field

The present invention relates to a magnetic exploration method and system for exploring invisible exploration objects on earth or in space, such as exploration objects containing a magnetic material buried in the ground or water, from their magnetic components.

### Background of the Invention

For example, JP 2023-007073A is known, which describes a magnetic exploration method for exploring the position and size of an exploration object including a magnetic material buried in the ground or submerged in water (including the sea). The magnetic exploration method shown in JP 2023-007073A synthesizes an output waveform of a magnetic field sensor having a first coil and a second coil that is arranged at a distance from the first coil in the axial direction and whose winding direction is opposite to that of the first coil. In the magnetic exploration method of JP 2023-007073A, as shown in Figure 6, an operator carries the magnetic field sensor over the exploration area to explore for exploration objects containing magnetic materials that exist underground.

### Brief Summary of the Invention

However, in the magnetic exploration method of JP 2023-007073A, if there are magnetic materials other than the exploration objects, the magnetic materials may affect the exploration object, making it impossible to accurately explore the exploration objects.

Therefore, the present invention aims to provide a magnetic exploration method and system that can explore for the exploration objects more accurately.

This embodiment is a magnetic exploration method for exploring an exploration object containing magnetic materials. The magnetic exploration method includes the steps of: setting a coordinate system in an exploration area where the exploration object is estimated to exist; measuring magnetic field vectors at a plurality of measurement points in the coordinate system with a movable first magnetic field sensor; measuring a reference magnetic field vector in the coordinate system in the exploration area; calculating vector differences between the magnetic field vectors measured at the measurement points and the reference magnetic field vector; and estimating the position of the exploration object based on the vector differences for each measurement point.

The step of measuring this reference magnetic field vector preferably includes a step of installing one or more reference magnetic field sensors that measure the reference magnetic field vector in the exploration area and/or in its vicinity. And the reference magnetic field vector measured by one reference magnetic field sensor may be regarded as the reference magnetic field vector, or the average value of the reference magnetic field vectors measured by two or more reference magnetic field sensors may be regarded as the reference magnetic field vector.

Furthermore, it is preferable that the step of calculating the vector difference synchronizes the times at which the magnetic field vectors of the multiple measurement points are measured by the first magnetic field sensor with the time at which the reference magnetic field vectors are measured by the reference magnetic field sensor.

This embodiment is a magnetic exploration method for exploring an exploration object that includes magnetic materials. The magnetic exploration method includes the steps of: setting a coordinate system in an exploration area where the object to be explored is estimated to exist, measuring exploration magnetic field vectors at multiple measurement points in the coordinate system using a movable first magnetic field sensor, calculating a reference magnetic field vector based on the exploration magnetic field vector measured by the first magnetic field sensor, calculating the vector difference between each exploration magnetic field vector measured at the measurement points and the reference magnetic field vector, and estimating the position of the exploration object based on the vector difference for each measurement point.

A movable second magnetic field sensor may be used to measure multiple magnetic field vectors in the exploration area, and the average of the magnetic field vectors at multiple points may be considered as the reference magnetic field vector. The first magnetic field sensor and the second magnetic field sensor may be the same magnetic field sensor.

The step of estimating the position of the exploration object may include calculating, for each measurement point, an S magnetic field vector due to the S pole of the exploration object and an N magnetic field vector due to the N pole of the exploration object that combine vector differences, calculating the distance between the measurement point and another measurement point, and estimating the position of the exploration object based on the intersection angle of the S magnetic field vector of the measurement point and another measurement point, the intersection angle of the N magnetic field vector of the measurement point and another measurement point, and the distance.

The step of estimating the position of the exploration object may also include estimating the position of the S pole of the exploration object based on the intersection angle and distance of the S magnetic field vector of the measurement point and another measurement point, estimating the position of the N pole of the exploration object based on the intersection angle and distance of the N magnetic field vector of the measurement point and another measurement point, and estimating the size of the exploration object based on the positions of the S pole and the N pole.

The magnetic exploration system of this embodiment which explores an exploration object including magnetic materials includes; a movable first magnetic field sensor that measures exploration magnetic field vectors of multiple measurement points in a coordinate system in an exploration area where the exploration object is estimated to exist, a reference magnetic field sensor that measures a reference magnetic field vector in the coordinate system in the exploration area, a difference calculation unit that calculates the vector difference between each exploration magnetic field vector measured at the measurement points and the reference magnetic field vector, and an estimation unit that estimates the position of the exploration object based on the vector difference for each measurement point.

In addition, the magnetic exploration system for exploring an exploration object including magnetic materials of this embodiment includes; a movable first magnetic field sensor that measures exploration magnetic field vectors of multiple measurement points in a three-dimensional orthogonal coordinate system in an exploration area where the exploration object is estimated to exist, a calculation unit that calculates a reference magnetic field vector of the exploration area based on the exploration magnetic field vector of the first magnetic field sensor, a difference calculation unit that calculates the vector difference between each exploration magnetic field vector measured at the measurement points and the reference magnetic field vector, and an estimation unit that estimates the position of the exploration object based on the vector difference for each measurement point.

The magnetic exploration method of this embodiment can more accurately explore the position of an exploration object.

### Brief Description of the Several Views of the Drawing

FIG. 1 is a figure showing a magnetic exploration system 100 that explores an exploration object using an unmanned aerial vehicle flying in the air.
FIG. 2 is a cross-sectional image of the geomagnetic field with and without an exploration object that contains magnetic materials.
FIG. 3 is a figure showing a magnetic exploration system 110 that explores an exploration object using a vehicle running on land.
FIG. 4 is a conceptual oblique view of a reference magnetic field sensor 20 or an exploration magnetic field sensor 30.
FIG. 5 (A) is a flowchart of magnetic exploration method 1.
FIG. 5 (B) is a first example of calculating a reference magnetic field vector from an exploration magnetic field vector.
FIG. 5 (C) is a second example of calculating a reference magnetic field vector from an exploration magnetic field vector.
FIG. 6 is a flowchart of magnetic exploration method 2.
FIG. 7 is a conceptual figure showing the relationship between the measured exploration magnetic field vector EF, reference magnetic field vector RF, magnetic field vector MF of the exploration object MM, magnetic field vector MN generated by the N pole, and magnetic field vector MS generated by the S pole. Note that FIG. 7 is a conceptual figure showing the location of Tokyo as viewed from the east.
Fig. 8 (A) is a conceptual figure in which the magnetic field vector MF of the exploration object MM exists on the magnetic flux lines of the exploration object MM.
Fig. 8 (B) is a conceptual figure in which the position and size of the exploration object MM are estimated based on the magnetic field vectors MS and MN at measurement points SU1 and SU2.

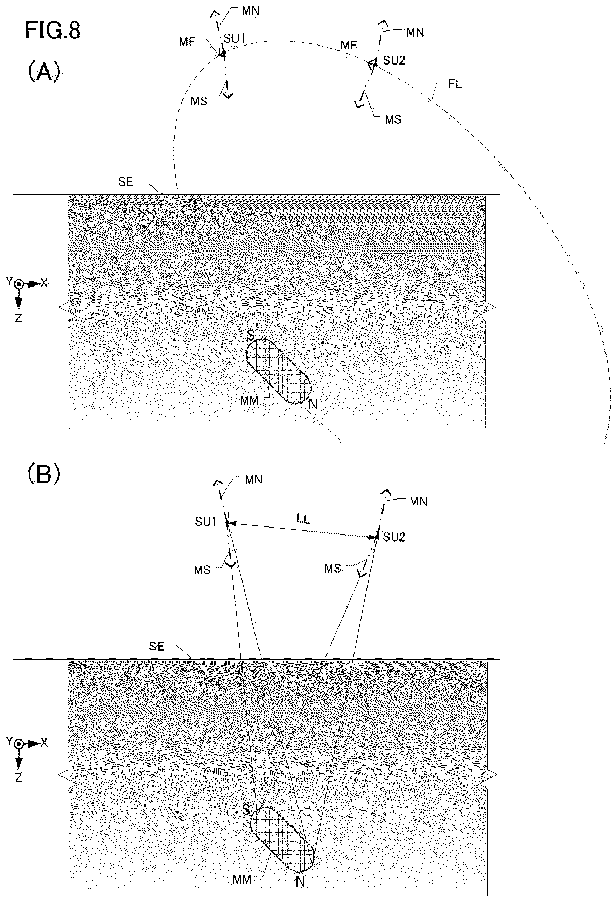

Note that Fig. 8 (A) and Fig. 8 (B) are conceptual figures in which the location of Tokyo is viewed from the east.

### Detailed Description of the Invention

The applicant will describe the embodiment of the present invention in detail below, with reference to the figures. In this specification and the drawings, components that have substantially the same functional configuration will be marked with the same symbol to omit duplicate explanations. Also, in each drawing, the actual dimensions are not depicted as shown.

### <FIRST EMBODIMENT>

### < Overview 1 of Magnetic exploration system >

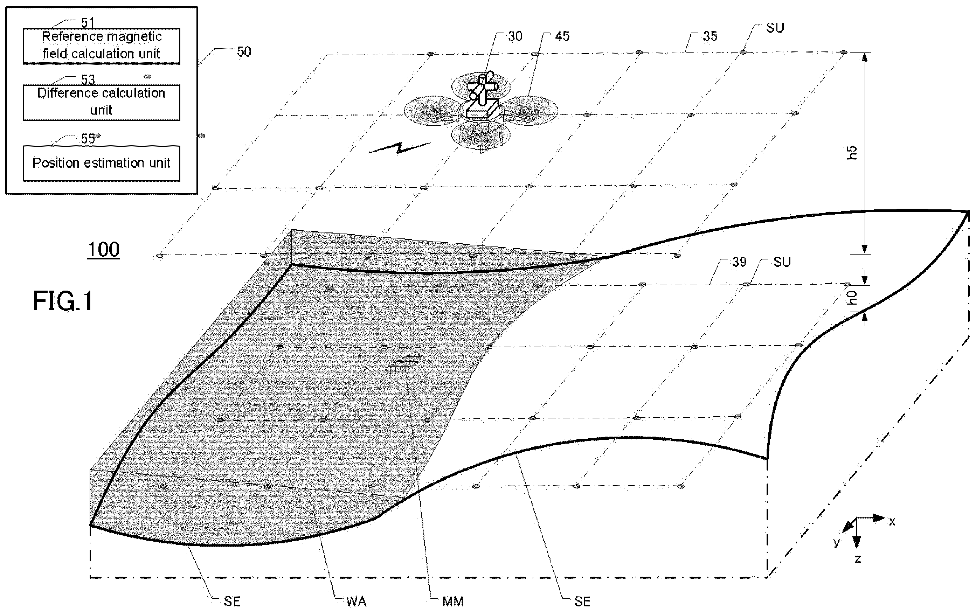

Figure 1 is a conceptual diagram of the first embodiment of the magnetic exploration system 100, showing an unmanned aerial vehicle 45 (commonly referred to as an aerial drone) flying in the air over an exploration object MM containing magnetic material that has settled in an underwater WA. The magnetic exploration system 100 includes one or more exploration magnetic field sensors 30 and a computer 50 that calculates an exploration magnetic field vector (hereinafter referred to as an exploration magnetic field) in a three-dimensional orthogonal coordinate system (hereinafter referred to as a coordinate system) from the exploration magnetic field sensor 30. The exploration magnetic field sensor 30 is mounted on an unmanned aerial vehicle 45 so that it can move above an exploration area where an exploration object MM is estimated to exist. Details of the exploration magnetic field sensor 30 will be described later.

The computer 50 does not need to be a computer located on the ground surface SE, but may be a smartphone carried by an operator or a virtual computer on the cloud. The exploration magnetic field sensor 30 may also include a computer 50 that calculates the exploration magnetic field.

It is preferable that the unmanned aerial vehicle 45 flies in the exploration area at different heights for the reference magnetic field vector (hereinafter referred to as the reference magnetic field) and for the exploration magnetic field. When probing the exploration object MM, the unmanned aerial vehicle 45 flies over the surface 39 of the exploration area at a height h0 above the water or ground surface, and the exploration magnetic field sensor 30 outputs exploration magnetic fields (DX, DY, DZ). Height h0 can be 0.5 m to 2 m above the water or ground surface if there are no workers or obstacles. It is preferable to fly at a height as close as possible to the exploration object MM. This is because the closer to the exploration object MM, the more susceptible it is to the magnetic field of the exploration object MM. In Figure 1, 24 measurement points (exploration points) SU are depicted in the exploration area 39 at height h0, but if the exploration magnetic field sensor 30 emits an exploration magnetic field at a sampling period of every second, for example, the number of measurement points reaches tens of thousands.

The exploration magnetic field of the exploration magnetic field sensor 30 is transmitted to the computer 50 by wired communication or wireless communication. Even if the exploration magnetic field sensor 30 does not have a communication function, the exploration magnetic field may be stored in a portable recording medium (such as an SD card or USB memory) from the exploration magnetic field sensor 30, and the operator may connect the recording medium to the computer 50.

When the unmanned aerial vehicle 45 flies for the reference magnetic field, it is preferable that it flies over the exploration area 35 at a height h5 above the water surface or the ground surface, and the exploration magnetic field sensor 30 outputs the exploration magnetic field for the reference magnetic field. In order to minimize the distortion of the magnetic field caused by the exploration object MM, it is preferable that the height h5 is as high as possible, for example, 20 m or more higher above the ground. Although 24 measurement points SU are depicted in the exploration area 35 at height h5, the actual number of measurement points reaches tens of thousands. In FIG. 1, the exploration area 35 and the exploration area 39 are also depicted as one area, but if the exploration area is very large, it may be divided into multiple exploration areas.

The computer 50 has a reference magnetic field calculation unit 51 that calculates a reference magnetic field based on the exploration magnetic field, a difference calculation unit 53 that calculates a vector difference between each exploration magnetic field measured at a measurement point and the reference magnetic field, and a position estimation unit 55 that estimates the position and size of the exploration object based on the vector difference for each measurement point. The computer 50 may further have a communication unit, etc.

### [Regarding geomagnetic field]

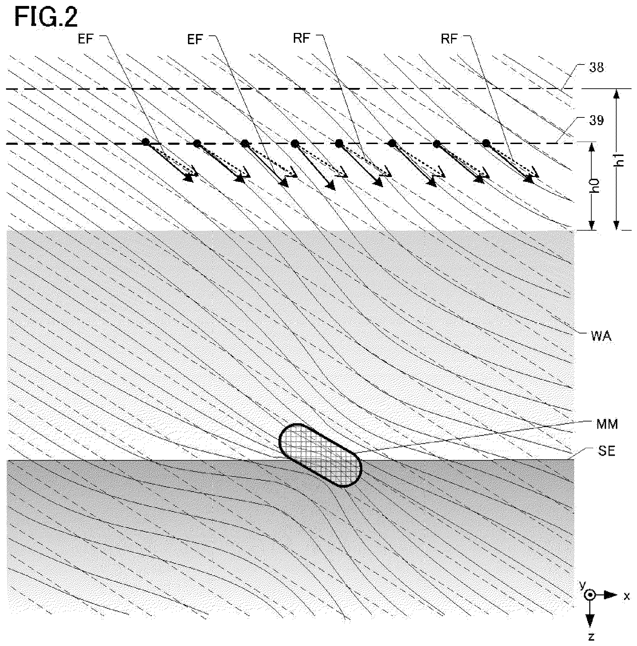

The applicant now uses Figure 2 to explain the change in geomagnetic field caused by the exploration object MM. As in Figure 1, the figure depicts the situation where the exploration object MM is submerged in the water WA, but Figure 2 depicts a cross-sectional image of t the situation where the exploration object MM is submerged. In Figure 2, the parallel dotted lines drawn diagonally represents the geomagnetic field in a state where the influence of the exploration object MM is small (or there is no the exploration object MM), and the solid curved lines represents the distortion of the magnetic field caused by the exploration object MM.

The exploration magnetic field sensor 30 mounted on the unmanned aerial vehicle 45 measures the exploration magnetic field at the measurement point SU in the surface 39 of the exploration area at height h0 and outputs the exploration magnetic field. When there is no exploration object MM, the output signal RF looks like an arrow (vector) drawn with a dotted line, and is a vector with almost constant direction and magnitude. However, strictly speaking, the geomagnetic field varies with time and location. On the other hand, when in a state where the exploration object MM is present, the output signal EF is drawn as a solid line, and the direction and magnitude of the output signal EF are such that they are pulled by the exploration object MM. In this embodiment, the position and/or size of the exploration object MM is estimated based on the vector difference between the reference magnetic field RF in the state where there is almost no influence of the exploration object MM or where the influence of the exploration object MM is reduced and the exploration magnetic field EF in the state where the exploration object MM is present.

The more measurement points SU of the vector difference between the reference magnetic field RF and the exploration magnetic field EF, the better the accuracy of estimating the position and/or size of the exploration object MM. The accuracy of estimating the position and/or size of the exploration object MM will be improved if the number of measurement points is increased by adding more layers, such as two layers including the face 38 of the exploration area of height h1, instead of only one layer of the surface 39 of the exploration area of height h0. By increasing the number of layers, the number of measurement points increases, and the accuracy of estimating the position and/or size of the exploration object MM improves. In Figures 1 and 2, the height of the measurement points SU on the face of the exploration area is assumed to be constant, but the height of the exploration area may vary for each measurement point. In addition, the unmanned aerial vehicle 45 may rotate around the roll axis, pitch axis, or yaw axis during flight, and at that time, the exploration magnetic field sensor 30 also rotates around the roll axis, pitch axis, or yaw axis. As described later, it is preferable that the three-axis output signals (DX, DY, DZ) of the exploration magnetic field sensor 30 are corrected so as to match the set coordinate system.

In the first embodiment, the reference magnetic field RF was calculated based on the exploration magnetic field at multiple measurement points in the exploration area 35 at height h5, but it is also possible to calculate the reference magnetic field RF based on the exploration magnetic field at surface 39 in the exploration area at height h0.

In the first embodiment, the reference magnetic field sensor 20 described in the second embodiment below is not provided, but one or more reference magnetic field sensors 20 may be provided. The reference magnetic field may be measured using the reference magnetic field sensor 20. Furthermore, the reference magnetic field may be calculated based on both the reference magnetic field of the reference magnetic field sensor 20 and the exploration magnetic field of the exploration magnetic field sensor 30 mounted on the unmanned aerial vehicle 45.

### <SECOND EMBODIMENT>

### < Overview 2 of Magnetic exploration system >

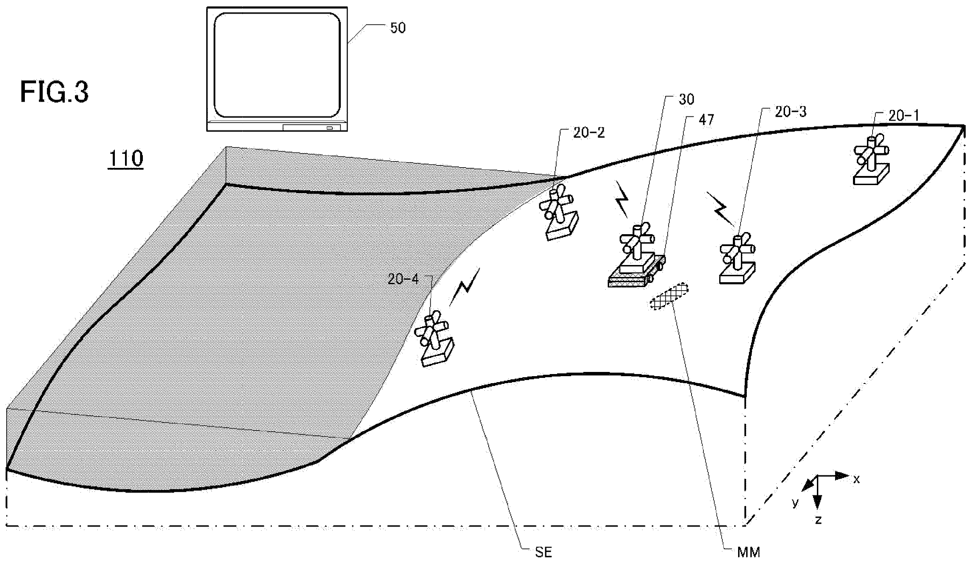

Figure 3 shows a conceptual diagram of the magnetic exploration system 110 of the second embodiment, in which an exploration object MM containing magnetic material buried underground is being explored using a vehicle 47 running on land. The magnetic exploration system 110 includes one or more reference magnetic field sensors 20, one or more exploration magnetic field sensors 30, and a computer 50 that estimates the position of the exploration object MM based on the reference magnetic field of the reference magnetic field sensors 20 or the exploration magnetic field of the exploration magnetic field sensors 30. The exploration magnetic field sensor 30 is mounted on the vehicle 47 so that it can move around the exploration area where the exploration object MM is estimated to be existed. In other words, the second embodiment provides a reference magnetic field sensor 20, which was not provided in the first embodiment. The computer 50 may be a smartphone or a cloud computer, etc., as in the first embodiment.

The reference magnetic field sensor 20 outputs a reference magnetic field (DX, DY, DZ) every second, for example. The reference magnetic field sensor 20 is installed on the ground surface SE, for example, during exploration by the exploration magnetic field sensor 30 mounted on the vehicle 47. When the exploration area is narrow, it is sufficient to install one reference magnetic field sensor 20; when the exploration area is large, multiple reference magnetic field sensors 20 may be installed. In FIG. 3, four reference magnetic field sensors 20-1 to 20-4 are installed on the ground surface SE at the vertices of a square spaced apart by 100 m, for example. The reference magnetic field sensor 20 may be installed within the exploration area in which the vehicle 47 moves, or may be installed near the outside of the exploration area. Also, some of the reference magnetic field sensors 20 may be within the exploration area, and the remaining reference magnetic field sensors 20 may be outside the exploration area.

When the reference magnetic field sensors 20 are installed on the ground surface SE, they may be tilted or installed according to the shape of the ground surface. As described later, the three-axis output signals (DX, DY, DZ) of the four reference magnetic field sensors 20 are corrected so as to match the set coordinate system. The output signals (DX, DY, DZ) of the four reference magnetic field sensors 20 are transmitted to the computer 50 by wired or wireless communication. Even if the reference magnetic field sensors 20 do not have a communication function, the output signals can be transferred from the reference magnetic field sensors 20 to a portable recording medium, and the operator can connect the portable recording medium to the computer 50.

The reference magnetic field sensor 20 may have the same configuration as the exploration magnetic field sensor 30, and outputs output signals (DX, DY, DZ) at regular intervals (for example, every second). Two or more exploration magnetic field sensors 30 may be mounted on the vehicle 47, and when multiple exploration magnetic field sensors 30 are mounted, it is preferable that the exploration magnetic field sensors 30 are as far apart as possible. In the first embodiment, the vehicle 47 is assumed to be a radio-controlled car, but instead of the vehicle 47, an operator may walk around holding the exploration magnetic field sensor 30.

The second embodiment shows an example where four reference magnetic field sensors 20 are provided, but as in the first embodiment, there may be no reference magnetic field sensors 20. If there is no reference magnetic field sensor 20, the reference magnetic field can also be obtained based on the exploration magnetic field of one exploration magnetic field sensor 30 obtained by moving around the ground surface of the exploration area with a vehicle 47.

### <Reference magnetic field sensor (exploration magnetic field sensor)>

Since the reference magnetic field sensor 20 and the exploration magnetic field sensor 30 may basically have the same structure, the applicant will explain the reference magnetic field sensor 20 as a representative example.

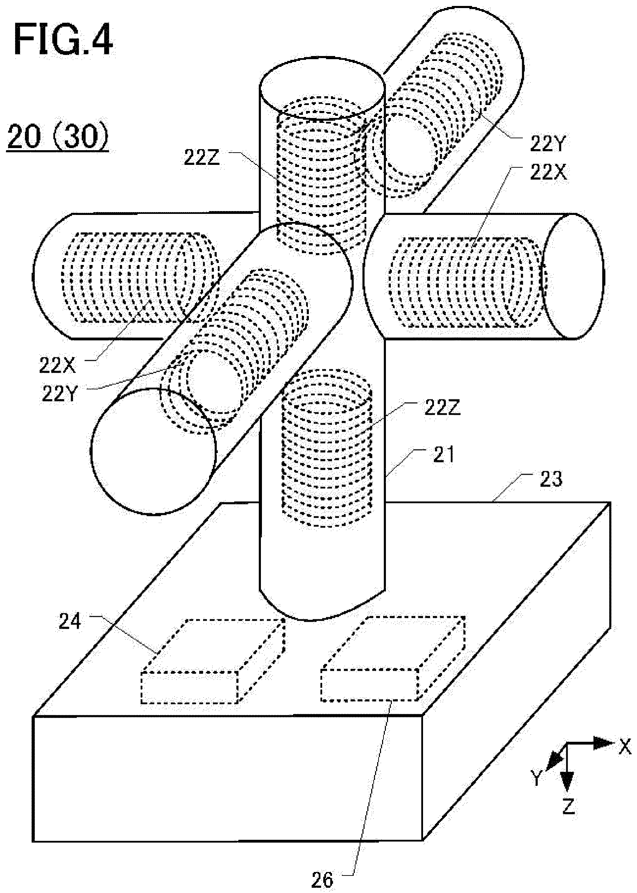

The reference magnetic field sensor 20 shown in Figure 4 includes a base part 23 and a bar-shaped part 21 attached to the base part 23. The bar-shaped part 21 is formed in the shape of three intersecting bars so as to face an orthogonal coordinate system. The reference magnetic field sensor 20 may further include a protective cover or a fixed stake for installation on the ground surface, which is not shown. The bar-shaped part 21 and the base part 23 are preferably fabricated from a non-magnetic material such as synthetic resin.

The reference magnetic field sensor 20 uses, for example, a solenoid coil as the magnetic field sensor 22 having sensitivity in a specific axial direction, and combines solenoid coils arranged in three axial directions. That is, the X-axis solenoid coil 22X is arranged on the bar-shaped part 21 extending in the X-axis direction, the Y-axis solenoid coil 22Y is arranged on the bar-shaped part 21 extending in the Y-axis direction, and the Z-axis solenoid coil 22Z is arranged on the bar-shaped part 21 extending in the Z-axis direction. In particular, the magnetic field sensor is not limited to a solenoid coil, and a fluxgate type magnetic field sensor or the like may be used. The analog signals from the magnetic field sensors 22 of each axis are converted to digital signals via a low-pass filter and an A/D converter, and are output as output signals (DX, DY, DZ). It is preferable that the output signals are output together with the measured time.

The reference magnetic field sensor 20 further has a position and orientation detector 24, a communication unit 26, a clock, and a battery. The reference magnetic field sensor 20 may have a calculation unit (CPU) that corrects the output of the reference magnetic field of the magnetic field sensor 22 to a set coordinate system.

The position and orientation detector 24 identifies the position of the reference magnetic field sensor 20. The position and orientation detector 24 also detects the orientation, etc. of the reference magnetic field sensor 20 in order to correct it in the coordinate system if the orientation of the magnetic field sensor 22 changes or is tilted. The reference magnetic field sensor 20 installed on a ground surface SE or the like may be installed on a tilted ground surface SE, for example. In addition, the exploration magnetic field sensor 30 mounted on the vehicle 47 or the unmanned aerial vehicle 45 changes direction or rotates due to vibrations during movement. Therefore, since each axial direction of the magnetic field sensor 22 are not necessarily oriented in the XYZ-axis direction, it is desirable to correct the output signals in each of these axial directions to a set coordinate system. The position and orientation detector 24 detects the position and orientation of the reference magnetic field sensor 20. The position and orientation detector 24 specifically includes a self-positioning device such as GNSS (Global Navigation Satellite System), camera measurements, or laser measurements. It may also include self-positioning devices such as inertial devices (e.g., motion sensors consisting of accelerometers or gyro-sensors). If the reference magnetic field sensor 20 does not have a position and orientation detector 24, the position and orientation of the reference magnetic field sensor 20 may be measured using a surveying instrument (not shown) to identify the position and orientation of the reference magnetic field sensor 20. In other words, the surveying instrument can replace the position and orientation detector 24. It is desirable to output the position and orientation signals together with the measured time.

The communication unit 26 transmits the output signal of the magnetic field sensor 22 and the position and orientation signals of the position and orientation detector 24 to the computer 50 via wired or wireless communication. If the reference magnetic field sensor 20 does not have the communication unit 26, an operator may transfer the output of the reference magnetic field from the reference magnetic field sensor 20 to a portable recording medium and connect the portable recording medium to the computer 50.

Since the reference magnetic field sensor 20 (and exploration magnetic field sensor 30) of the first and second embodiments detects a magnetic field strength that is extremely small relative to the geomagnetic field, it is preferable that the sensitivity characteristics of the magnetic field sensors in the three axial directions are accurately corrected. For this reason, it is preferable to equalize the sensitivity, offset, and axial misalignment of the magnetic field sensors 22 in the three axial directions. In order to equalize the sensitivity, offset, and axial misalignment of these magnetic field sensors, it is desirable to incorporate a predetermined correction coefficient into the reference magnetic field sensor 20. The correction coefficient is calculated by placing the solenoid coil 22 of the reference magnetic field sensor 20 on a rotating table (not shown) so that the solenoid coil 22 coincides with the rotation axis of the rotating table. The rotating table is then rotated to obtain the output of the reference magnetic field sensor 20, and a correction coefficient for making the fluctuation of the output constant is obtained and stored in a memory or the like.

### <Magnetic exploration method 1>

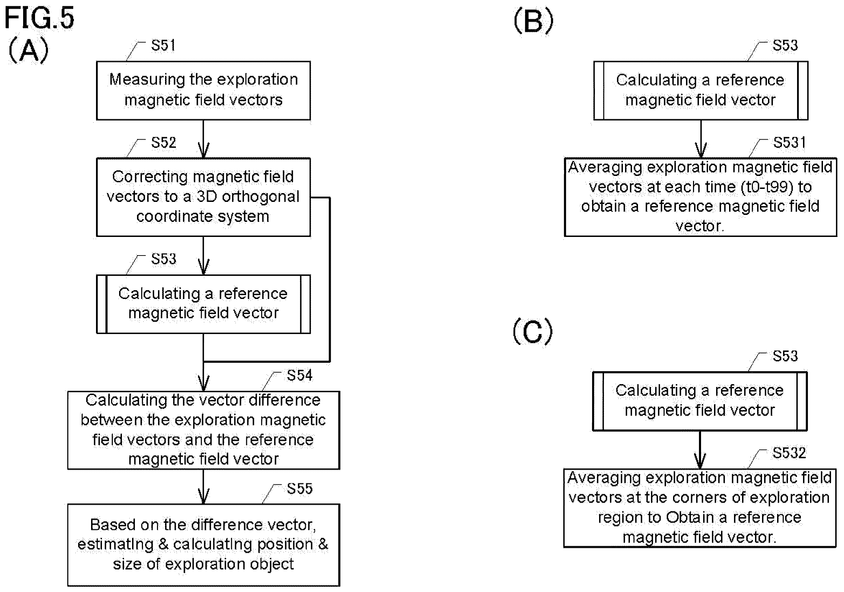

Figure5(A) is a flowchart showing a magnetic exploration method used in the magnetic exploration systems of the first and second embodiments. Figure 5(A) shows an example in which the magnetic exploration system 100 or the magnetic exploration system 110 does not include a reference magnetic field sensor 20. For this reason, Figure 1, in which the reference magnetic field sensor 20 is not depicted, is to be referred to as necessary.

In step S51, the exploration magnetic field sensor 30 mounted on the unmanned aerial vehicle 45 or vehicle 47 measures the exploration magnetic field in the three axial directions (X, Y, Z) at predetermined time intervals (sampling period). In conjunction with this measurement, the position and orientation detector 24 detects the position of the exploration magnetic field sensor 30 and how much the three axes of the exploration magnetic field sensor 30 are displaced from the set coordinate system (including the roll, pitch or yaw axes of the three axes). The set coordinate system may be, for example, three-dimensional Cartesian coordinates in the direction east of the earth (+y direction), north (+x direction), and the normal direction (z direction) of the plane including east, west, north, south, and west. Any other coordinate system may be set.

Referring to Figure 1, the exploration magnetic field sensor 30 mounted on the unmanned aerial vehicle 45 measures the exploration magnetic field at multiple measurement points SU (times t0, t1...t99) in the exploration area 35 at height h5. The unmanned aerial vehicle 45 then moves to height h0 and flies over the surface 39 of the exploration area at height h0, and the exploration magnetic field sensor 30 measures the exploration magnetic field at multiple measurement points SU (times t100, t101...t199). Alternatively, the unmanned aerial vehicle 45 may first fly over the surface 39 of the exploration area at height h0 and then fly over the exploration area 35 at height h5 to measure the exploration magnetic field. The exploration magnetic field may be measured by an exploration magnetic field sensor mounted on another unmanned aerial vehicle for the reference magnetic field.

In step S52, the exploration magnetic field (times t0, t1...t100...t199) measured in step S51 is corrected to a coordinate system that is set based on the position and orientation detected by the position and orientation detector 24 provided in the exploration magnetic field sensor 30. That is, in steps S51 and S52, the exploration magnetic field of the measurement points in the coordinate system is measured.

In step S53, the reference magnetic field is calculated from the corrected exploration magnetic field. The calculation method is explained in detail in Figures 5(B) and 5(C).

In step S54, the difference calculation unit 53 calculates the vector difference between the exploration magnetic field EF (coordinate corrected) that went through step S52 and the reference magnetic field RF (coordinate corrected) in step S53. This vector difference can be regarded as the object magnetic field vector generated by the exploration object MM. The magnetic field vector generated only by the exploration object MM is called the object magnetic field vector (hereafter referred to as the object magnetic field) MF. In addition, the exploration object MM, which includes a magnetic material, has a S pole and a N pole due to the geomagnetic field.

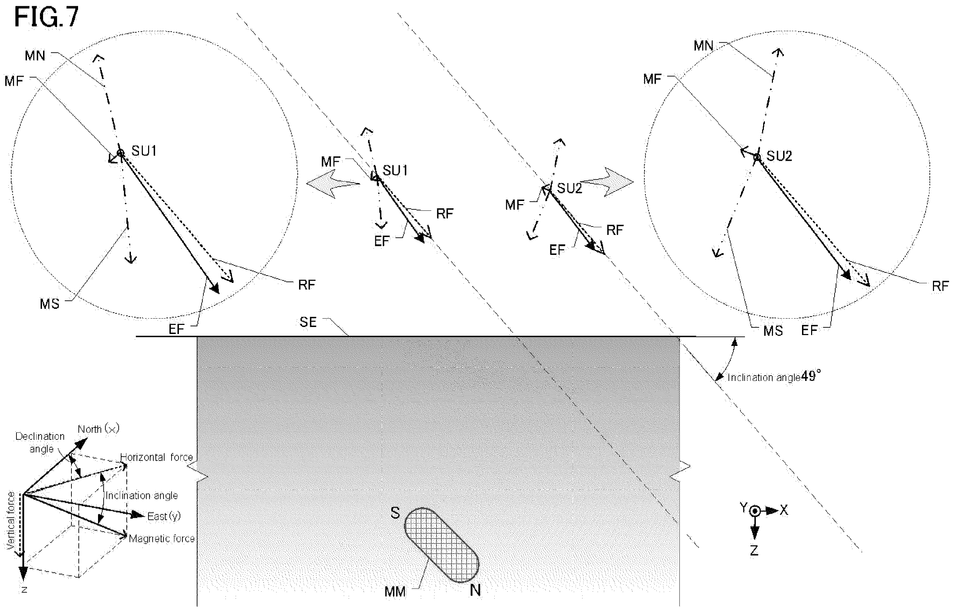

In step S55, based on the vector difference (object magnetic field MF) calculated in step S54, the position estimation unit 55 calculates the N magnetic field vector (hereinafter referred to as the N magnetic field) MN generated by the N pole of the exploration object MM and the magnetic field vector (hereinafter referred to as the S magnetic field) MS generated by the S pole of the exploration object MM. Furthermore, the position estimation unit 55 calculates the distance LL between one measurement point SU and another measurement point SU. By calculating the N magnetic field MN, the S magnetic field MS of the multiple measurement points, and the distance LL between the multiple measurement points, the position estimation unit 55 can estimate the position and/or size of the exploration object MM. The calculation of the estimated position and size of the MM is described later in Figures 7 and 8.

In the above explanation, the exploration magnetic field sensor 30 mounted on the unmanned aerial vehicle 45 measured the exploration magnetic field in the exploration area 39 at height h0 and the exploration area 35 at height h5. However, the reference magnetic field may be calculated using the magnetic field obtained from the measurement in the exploration area 39 at height h0, without measuring in the exploration area 35 at height h5. In this case, this reference magnetic field is easily affected by the magnetic field generated by the exploration object MM. Also, only step S51 may be performed by the exploration magnetic field sensor 30, and steps S52-S55 may be calculated by the computer 50, or steps S51-S55 may be calculated within the exploration magnetic field sensor 30.

### (Calculation of the reference magnetic field by time averaging)

Figure 5(B) shows a first example in which the reference magnetic field calculation unit 51 calculates the reference magnetic field based on the exploration magnetic field measured by the exploration magnetic field sensor 30. The first example is a method in which the exploration magnetic fields measured at different times (t0-t99) are averaged and the average value is used as the reference magnetic field. For example, in Figure 1, an unmanned aerial vehicle 45 flies over the entire exploration area 35 from time t0 to time t99 at a height h5 and measures the exploration magnetic field at each time. The reference magnetic field calculation unit 51 averages the 100 measured exploration magnetic fields to obtain a reference magnetic field. In addition to averaging all the measured exploration magnetic fields, if it is determined that the exploration magnetic fields clearly contain abnormal signals, the reference magnetic field calculation unit 51 may average the exploration magnetic fields excluding those exploration magnetic fields, or may average the discrete exploration magnetic fields at times t0, t9, t19...t99.

### (Calculation of the reference magnetic field by spatial averaging)

Figure 5(C) is a second example where the reference magnetic field calculation unit 51 calculates a reference magnetic field based on the exploration magnetic field measured by the exploration magnetic field sensor 30. The reference magnetic field calculation unit 51 averages the exploration magnetic fields measured at different positions and uses the average value as the reference magnetic field. For example, the reference magnetic field calculation unit 51 averages the exploration magnetic fields at 24 points in the exploration area 35 at height h5 shown in FIG. 1 to set the reference magnetic field.

### (Calculation of the reference magnetic field by other methods)

Although not shown in the figure, in particular in the case of an unmanned aerial vehicle 45 that can be set high above the ground or water surface (for example, 100 m), it is possible to use only one measurement of the exploration magnetic field measured by the exploration magnetic field sensor 30 at an altitude of 100 m as the reference magnetic field. This is because at an altitude of 100 m or more, there is little effect from the magnetic field of the exploration object MM buried underground or underwater.

### <Magnetic exploration method 2>

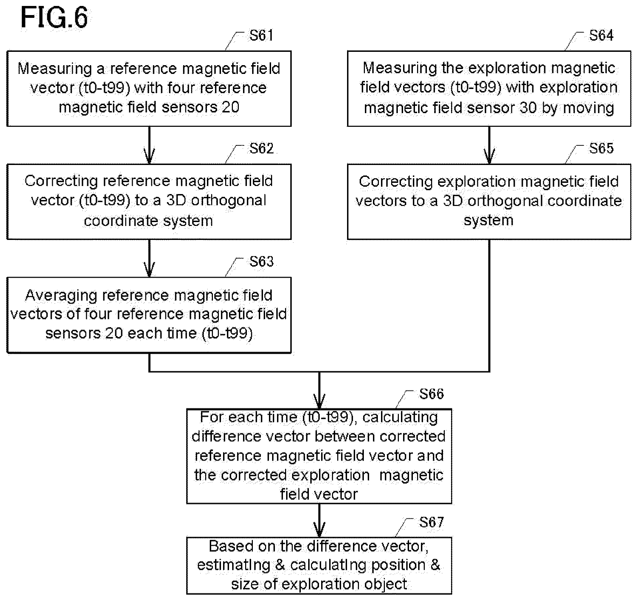

Figure 6 is a flowchart showing the magnetic exploration method used in the first and second embodiments of the magnetic exploration system. Figure 6 is an example where the magnetic survey system 100 or magnetic survey system 110 includes a reference magnetic field sensor 20. For this purpose, Figure 3, in which the reference magnetic field sensor 20 is depicted, is referenced as necessary.

In step S61, it is preferable that the reference magnetic field sensor 20 installed on the ground surface or the like measures the reference magnetic field in the three axial directions (X, Y, Z) at every predetermined time intervals (sampling period (t0-t99)). In conjunction with this measurement, the position and orientation detector 24 detects the position of the reference magnetic field sensor 20 and how much the three axes of the reference magnetic field sensor 20 are displaced from the set coordinate system (including the roll, pitch or yaw axis of the three axes). Since the reference magnetic field sensor 20 is installed on the ground surface SE, the position and orientation detector 24 does not need to detect it at every sampling period, but may detect it only once. Referring to Figure 3, four reference magnetic field sensors 20 are installed near the outside of the exploration area where the vehicle 47 is traveling, but the reference magnetic field sensors 20 may be installed inside the exploration area.

In step S62, the reference magnetic field (time t0, t1......t99) measured in step S61 is corrected to the coordinate system to be set based on the position and orientation detected by the position and orientation detector 24 of the reference magnetic field sensor 20. In other words, in steps S61 and S62, the reference magnetic field in the coordinate system to be set is measured.

In step S63, the reference magnetic fields (coordinates corrected) output from the four reference magnetic field sensors 20 are averaged for each sampling period and regarded as the reference magnetic field. If only one reference magnetic field sensor 20 is installed, the one reference magnetic field (coordinates corrected) is regarded as the reference magnetic field for each sampling period. Regardless of the sampling period, it is also possible to average the reference magnetic fields for all sampling periods and regard it as the reference magnetic field.

In step S64, the exploration magnetic field sensor 30 mounted on the unmanned aerial vehicle 45 or vehicle 47 measures the exploration magnetic field in the three axial directions (X, Y, Z) at predetermined time intervals (sampling period (t0-t99)). In conjunction with this measurement, the position and orientation detector 24 detects the position of the exploration magnetic field sensor 30 and how much the three axes of the exploration magnetic field sensor 30 are displaced from the set coordinate system (including the roll, pitch or yaw axis of the three axes). For convenience of explanation, step S64 is described after step S61, but since the geomagnetic field varies with time, it is preferable that step S64 measures the exploration magnetic field in synchronization with step S61 (a difference in measurement time of less than one second is considered to be synchronized).

In step S65, the exploration magnetic field (time t0, t1......t99) measured in step S64 is corrected to the coordinate system to be set based on the position and orientation detected by the position and orientation detector 24. In other words, in steps S64 and S65, the exploration magnetic field of the measurement point in the coordinate system is measured.

In step S66, the difference calculation unit 53 preferably calculates the vector difference between the reference magnetic field RF in step S63 and the exploration magnetic field EF after step S65 for each time (t0-t99). Since the geomagnetic field changes with time, strictly speaking, if the vector difference is calculated for each time, a vector difference with high accuracy can be obtained. This vector difference can be regarded as the object magnetic field vector generated by the exploration object MM.

In step S67, based on the vector difference (object magnetic field MF) calculated in step S66, the position estimation unit 55 calculates the N magnetic field MN generated by the N pole and the S magnetic field MS generated by the S pole of the exploration object MM. Furthermore, the position estimation unit 55 calculates the distance LL between a certain measurement point SU and another measurement point SU. By calculating the N magnetic field MN and S magnetic field MS of multiple measurement points and the distance LL between the multiple measurement points, the position estimation unit 55 can estimate the position and size of the exploration object MM. The calculation of the position and size of the exploration object MM will be described later with reference to Figures 7 and 8.

In the magnetic exploration method 2 shown in Figure 6, the exploration magnetic field output from the exploration magnetic field sensor 30 was not used for the reference magnetic field. However, it is possible to combine the reference magnetic field from the reference magnetic field sensor 20 and the average value of the exploration magnetic field from the exploration magnetic field sensor 30 to make a reference magnetic field.

### (Location and size of the exploration object MM)

The method of estimating the position and/or size of the exploration object MM estimated in steps S55 and S67 is explained using Figures 7 and 8.

Figures 7 and 8 are conceptual diagrams of an example of magnetic exploration in Tokyo, Japan, looking from east to west. The geomagnetic field in Tokyo has an inclination angle of 49°, and Figures 7 and 8 are plan views of the geomagnetic field with an inclination angle of 49° and a declination angle of 0°. The inclination angle and declination angle are explained in the lower left of Figure 7.

In Figures 7 and 8, an example is shown where the exploration magnetic field EF is measured at two measurement points SU1 and SU2. The exploration object MM, which contains magnetic material, is buried underground at a certain depth from the ground surface SE and has S and N poles due to geomagnetic field. The reference magnetic field RF is at least one of the reference magnetic fields calculated based on the exploration magnetic field EF and/or the reference magnetic field output from the reference magnetic field sensor 20, as described in the flowchart in Figure 5 or Figure 6.

In Figure 7, the magnetic field vectors of the measurement points SU1 and SU2 are shown enlarged in the circled area. The object magnetic field MF of the exploration object MM is the vector difference (target magnetic field MF) of the exploration magnetic field EF minus the reference magnetic field RF. This object magnetic field MF is a composite vector of the S magnetic field MS (double-dotted line) due to the S pole and the N magnetic field MN (single-dotted line) due to the N pole of the exploration object MM. The position estimation unit 55 calculates the S magnetic field MS and the N magnetic field MN based on the vector difference.

Figure 8(A) is a conceptual diagram showing one magnetic flux line FL passing through the S pole and N pole of the exploration object MM. The object magnetic field MF exists on the magnetic flux line FL. To facilitate understanding, Figure 8(A) shows an example in which a magnetic flux line passing through measurement point SU1 and a magnetic flux line passing through measurement point SU2 exist on the same magnetic flux line FL. In many cases, it is common for different measurement points SU to pass through different magnetic flux lines.

Figure 8(B) is a conceptual diagram for estimating the position and size of the exploration object MM based on the N magnetic field MN and the S magnetic field MS. The positions (x, y, z) of the measurement points SU1 and SU2 are detected using the position and orientation detector 24 in the exploration magnetic field sensor 30. This means that the position estimation unit 55 can calculate the distance LL between the measuring points SU1 and SU2. The position estimation unit 55 can also calculate the intersection angle between the S magnetic field MS (double-dashed line) due to the S pole of measurement point SU1 and the S magnetic field MS (double-dashed line) due to the S pole of measurement point SU2. Based on the intersection angle and the distance LL, the distance from the measurement point SU1 or the measurement point SU2 can be calculated. This procedure allows the position (x, y, z) of the S pole of the exploration object MM to be estimated. Similarly, the position estimation unit 55 can calculate the distance from the measurement point SU1 or SU2 based on the intersection angle between the N magnetic field MN (single dotted line) due to the N pole of the measurement point SU1 and the N magnetic field MN (single dotted line) due to the N pole of the measurement point SU2 and the distance LL. This allows the position estimation unit 55 to estimate the position (x, y, z) of the N pole of the exploration object MM. That is, the position estimation unit 55 can estimate the position obtained by dividing the position of the S pole and the position of the N pole into two as the position of the exploration object MM. Instead of the position obtained by dividing the position of the S pole and the position of the N pole into two, the position estimation unit 55 may estimate the position of the exploration object MM as the position of the S pole or the N pole.

Furthermore, since the distance between the position of the S pole and the position of the N pole of the exploration object MM can be calculated, the size of the exploration object MM can be estimated based on this distance.

In the first embodiment, a magnetic exploration system using an unmanned aerial vehicle 45 was described, and in the second embodiment, a magnetic exploration system using a vehicle 47 running on land was described. In particular, an unmanned submarine (underwater drone) can be used to explore for exploration objects MM in deep water (underwater). Even underwater, the reference magnetic field sensor 20 can measure the reference magnetic field or the exploration magnetic field sensor 30 can measure the exploration magnetic field. On the other hand, the position and orientation detector 24, such as GNSS, cannot be used underwater. Therefore, at least one or more self-localization using acoustic positioning, laser measurement, inertial devices, etc. is preferred. When the GNSS is the position and orientation detector 24, it is preferable to have the position and orientation detector 24 float on the water. In addition, it is preferable that the output signal of the magnetic field of the reference magnetic field sensor 20 or the exploration magnetic field sensor 30 in the water is output by acoustic communication, optical communication, or wired communication using a cable.

The first and second embodiments have mainly described a method of exploring for exploration objects containing magnetic materials on the earth. However, this embodiment can also explore for exploration objects in space, such as on the moon or Mars. For example, on the surface of a satellite or planet, the exploration magnetic field sensor 30 can be mounted on an exploration vehicle (rover) moving on the surface of the satellite or planet to measure the exploration magnetic field, as described in the second embodiment. In addition, the exploration magnetic field sensor 30 can be mounted on a probe (floating by a propeller or levitating by gas jet) that can fly at an extremely low altitude on the surface of a satellite or planet to measure the exploration magnetic field.

In space, such as on a satellite or planet, GNSS cannot be used as the position and orientation detector 24, but the position and orientation of the reference magnetic field sensor 20 or the exploration magnetic field sensor 30 can be detected using at least one position and orientation detector 24 such as camera measurement, laser measurement, or inertial device.

In the first and second embodiments, we have mainly described a method for exploring for exploration objects containing magnetic materials buried mainly in soil or water. However, it is not limited to this. For example, the system and method of this embodiment can explore for exploration objects that cannot be seen, such as exploration objects covered by overgrown trees, exploration objects that fall into crevices and are difficult to find, and so on. It is also possible to move the exploration magnetic field sensor 30 around the human body and explore the location of the capsule-type gastroscope from its exploration magnetic field.

### Explanation of symbols

100, 110...Magnetic exploration system
20...Reference magnetic field sensor, 24...Position and direction detector,
26...Communication unit
30...Exploration magnetic field sensor
45...Unmanned aerial vehicle, 47...Vehicle
50...Computer
EF...Exploration magnetic field vector, RF...Reference magnetic field vector
MM...Exploration object,
MF... Object magnetic field vector of an exploration object,
MN...N magnetic field vector due to N pole,
MS...S magnetic field vector due to S pole
SE...Ground surface,
SU (SU1, SU2)...Measurement point

## Claims

1. A magnetic exploration method for exploring an exploration object including a magnetic material, comprising steps of:
setting a three-dimensional orthogonal coordinate system (hereinafter referred to as "coordinate system") in an exploration area in which the exploration object is estimated to exist, and measuring magnetic field vectors of a plurality of measurement points in the coordinate system with a movable first magnetic field sensor;
measuring a reference magnetic field vector in the coordinate system in the exploration area;
calculating a vector difference between each of the magnetic field vectors measured at the measurement points and the reference magnetic field vector; and
estimating the position of the exploration object based on the vector difference for each measurement point.

2. The magnetic exploration method according to claim 1, wherein
the step of measuring the reference magnetic field vector includes a step of installing one or more reference magnetic field sensors in the exploration area and/or in the vicinity thereof for measuring the reference magnetic field vector,
the reference magnetic field vector measured by one of the reference magnetic field sensors is regarded as the reference magnetic field vector, or the average value of the reference magnetic field vectors measured by two or more of the reference magnetic field sensors is regarded as the reference magnetic field vector.

3. The magnetic exploration method according to claim 2, wherein
in the step of calculating the vector difference, respective times at which the magnetic field vectors of the plurality of measuring points are measured by the first magnetic field sensor are synchronized with the times at which the reference magnetic field vectors are measured by the reference magnetic field sensor.

4. A magnetic exploration method for exploring an exploration object including a magnetic material, comprising steps of:
setting a three-dimensional orthogonal coordinate system (hereinafter referred to as "coordinate system") in an exploration area in which the exploration object is estimated to exist, and measuring exploration magnetic field vectors of a plurality of measurement points in the coordinate system with a movable first magnetic field sensor;
calculating a reference magnetic field vector based on the exploration magnetic field vector measured by the first magnetic field sensor;
calculating a vector difference between each of the exploration magnetic field vectors measured at the measurement points and the reference magnetic field vector; and
estimating the position of the exploration object based on the vector difference for each measurement point.

5. The magnetic exploration method according to claim 4, wherein a movable second magnetic field sensor is used to measure the magnetic field vector at multiple points in the exploration area, and the average value of the magnetic field vectors at the multiple points is regarded as the reference magnetic field vector.

6. The magnetic exploration method according to claim 5, wherein the first magnetic field sensor and the second magnetic field sensor are the same magnetic field sensor.

7. The magnetic exploration method according to claim 1 or 4, wherein
the step of estimating the position of the exploration object includes
a step of calculating, for each of the measurement points, an S magnetic field vector due to the S pole and an N magnetic field vector due to the N pole of the exploration object, which combine the vector differences, and
a step of calculating the distance between the measurement point and another measurement point, and
a step of estimating a position of the exploration object based on an intersection angle of the S magnetic field vector between the measurement point and another measurement point, an intersection angle of the N magnetic field vector between the measurement point and another measurement point, and the distance.

8. The magnetic exploration method according to claim 7, wherein
the step of estimating the position of the exploration object includes
estimating a position of the S pole of the exploration object based on the intersection angle of the S magnetic field vectors of the measurement point and another measurement point and the distance;
estimating a position of the N pole of the exploration object based on the intersection angle of the N magnetic field vectors of the measurement point and another measurement point and the distance; and
estimating a size of the exploration object based on the positions of the S pole and the N pole.

9. A magnetic exploration system for exploring an exploration object including a magnetic material, comprising:
a movable first magnetic field sensor that measures an exploration magnetic field vector at a plurality of measurement points in a three-dimensional orthogonal coordinate system (hereinafter referred to as the coordinate system) in an exploration area in which the exploration object is estimated to exist;
a reference magnetic field sensor for measuring a reference magnetic field vector in the coordinate system in the exploration area;
a difference calculation unit for calculating a vector difference between each of the exploration magnetic field vectors measured at the measurement points and the reference magnetic field vector; and
an estimation unit for estimating a position of the exploration object based on the vector difference for each measurement point.

10. A magnetic exploration system for exploring an exploration object including a magnetic material, comprising:
a movable first magnetic field sensor that measures an exploration magnetic field vector at a plurality of measurement points in a three-dimensional orthogonal coordinate system (hereinafter referred to as the coordinate system) in an exploration area in which the exploration object is estimated to exist;
a calculation unit for calculating a reference magnetic field vector of the exploration area based on the exploration magnetic field vector of the first magnetic field sensor;
a difference calculation unit for calculating a vector difference between each of the exploration magnetic field vectors measured at the measurement points and the reference magnetic field vector; and
an estimation unit for estimating a position of the exploration object based on the vector difference for each measurement point.

## Amended claims

### Amended claims under Art. 19.1 PCT

1. A magnetic exploration method for exploring an exploration object including a magnetic material, comprising steps of:
setting a three-dimensional orthogonal coordinate system in an exploration area in which the exploration object is estimated to exist, and measuring magnetic field vectors of a plurality of measurement points in the coordinate system with a movable first magnetic field sensor;
measuring a reference magnetic field vector in the coordinate system in the exploration area;
calculating a vector difference between each of the magnetic field vectors measured at the measurement points and the reference magnetic field vector; and
estimating the position of the exploration object based on the vector difference for each measurement point.

2. The magnetic exploration method according to claim 1, wherein
the step of measuring the reference magnetic field vector includes a step of installing one or more reference magnetic field sensors in the exploration area and/or in the vicinity thereof for measuring the reference magnetic field vector,
the reference magnetic field vector measured by one of the reference magnetic field sensors is regarded as the reference magnetic field vector, or the average value of the reference magnetic field vectors measured by two or more of the reference magnetic field sensors is regarded as the reference magnetic field vector.

3. The magnetic exploration method according to claim 2, wherein
in the step of calculating the vector difference, respective times at which the magnetic field vectors of the plurality of measuring points are measured by the first magnetic field sensor are synchronized with the times at which the reference magnetic field vectors are measured by the reference magnetic field sensor.

4. A magnetic exploration method for exploring an exploration object including a magnetic material, comprising steps of:
setting a three-dimensional orthogonal coordinate system in an exploration area in which the exploration object is estimated to exist, and measuring exploration magnetic field vectors of a plurality of measurement points in the coordinate system with a movable first magnetic field sensor;
calculating a reference magnetic field vector based on the exploration magnetic field vector measured by the first magnetic field sensor;
calculating a vector difference between each of the exploration magnetic field vectors measured at the measurement points and the reference magnetic field vector; and
estimating the position of the exploration object based on the vector difference for each measurement point.

5. The magnetic exploration method according to claim 4, wherein a movable second magnetic field sensor is used to measure the magnetic field vector at multiple points in the exploration area, and
the average value of the magnetic field vectors at the multiple points is regarded as the reference magnetic field vector.

6. The magnetic exploration method according to claim 5, wherein the first magnetic field sensor and the second magnetic field sensor are the same magnetic field sensor.

7. The magnetic exploration method according to claim 1 or 4, wherein
the step of estimating the position of the exploration object includes
a step of calculating, for each of the measurement points, an S magnetic field vector due to the S pole and an N magnetic field vector due to the N pole of the exploration object, which combine the vector differences, and
a step of calculating the distance between the measurement point and another measurement point, and
a step of estimating a position of the exploration object based on an intersection angle of the S magnetic field vector between the measurement point and another measurement point, an intersection angle of the N magnetic field vector between the measurement point and another measurement point, and the distance.

8. The magnetic exploration method according to claim 7, wherein
the step of estimating the position of the exploration object includes estimating a position of the S pole of the exploration object based on the intersection angle of the S magnetic field vectors of the measurement point and another measurement point and the distance;
estimating a position of the N pole of the exploration object based on the intersection angle of the N magnetic field vectors of the measurement point and another measurement point and the distance; and
estimating a size of the exploration object based on the positions of the S pole and the N pole.

9. A magnetic exploration system for exploring an exploration object including a magnetic material, comprising:
a movable first magnetic field sensor that measures an exploration magnetic field vector at a plurality of measurement points in a three-dimensional orthogonal coordinate system in an exploration area in which the exploration object is estimated to exist;
a reference magnetic field sensor for measuring a reference magnetic field vector in the coordinate system in the exploration area;
a difference calculation unit for calculating a vector difference between each of the exploration magnetic field vectors measured at the measurement points and the reference magnetic field vector; and
an estimation unit for estimating a position of the exploration object based on the vector difference for each measurement point.

10. A magnetic exploration system for exploring an exploration object including a magnetic material, comprising:
a movable first magnetic field sensor that measures an exploration magnetic field vector at a plurality of measurement points in a three-dimensional orthogonal coordinate system in an exploration area in which the exploration object is estimated to exist;
a calculation unit for calculating a reference magnetic field vector of the exploration area based on the exploration magnetic field vector of the first magnetic field sensor;
a difference calculation unit for calculating a vector difference between each of the exploration magnetic field vectors measured at the measurement points and the reference magnetic field vector; and
an estimation unit for estimating a position of the exploration object based on the vector difference for each measurement point.
